# EUROPÄISCHE PATENTANMELDUNG

(11) **EP 3 389 022 A1**
(43) Veröffentlichungstag der Anmeldung: **17.10.2018**
(21) Anmeldenummer: 17166081.4
(22) Anmeldetag: 11.04.2017
(51) Int. Cl.: G07F 17/00, B65B 35/02, B65B 5/10, A61J 3/00, G07F 11/44, B65D 83/04, G07F 11/00

(54) **VORRATSBEHÄLTER FÜR EINE VORRATS- UND ABGABESTATION**

(71) Anmelder: Becton Dickinson Rowa Germany GmbH, 53539 Kelberg (DE)
(72) Erfinder: GROSS, Dietmar, 53539 Kelberg (DE)
(74) Vertreter: Zenz Patentanwälte Partnerschaft mbB

(57) **Zusammenfassung**

Die Erfindung betrifft einen Vorratsbehälter (1) für eine Vorrats- und Abgabestation für Arzneimittel. Bei bekannten Vorratsbehältern müssen Abschnitte eines Rückhaltemittels durch einen Schlitz in der Gehäusewand geführt werden. Da die Position des Schlitzes von der Art der Arzneimittelportionen abhängig ist, können bekannte Vorratsbehälter nicht mit beliebigen Arzneimitteln verwendet werden. Erfindungsgemäß wird dieses Problem gelöst durch einen Vorratsbehälter mit einem einen Aufnahmeraum (2) umschließenden Gehäuse (10) mit einem kreiszylinderförmigen Abschnitt (11) und einer Bodenfläche (14), wobei der kreiszylinderförmige Abschnitt (11) eine vertikale Führungsausnehmung (20) und die Bodenfläche (14) eine Abgabeöffnung (15) aufweist. Der Vorratsbehälter umfasst ferner eine Vereinzelungseinrichtung (30) mit zumindest einem Kanal (31) zur Aufnahme zumindest einer Arzneimittelportion sowie ein Rückhaltemittel (40) mit einem Rückhalteabschnitt (41) und einem Führungsmittel (45), welches in der Führungsausnehmung (20) angeordnet ist und wobei die Führungsausnehmung (20) und das Führungsmittel (45) derart zusammenwirken, dass das Rückhaltemittel (40) über das Führungsmittel (45) höhenverstellbar in der Führungsausnehmung (20) angeordnet ist und eine Drehbewegung des Rückhaltemittels (40) verhindert ist.

## Beschreibung

Die vorliegende Erfindung betrifft einen Vorratsbehälter für eine Vorrats- und Abgabestation für Stückgüter, insbesondere Arzneimittel.

Moderne Blisterautomaten, wie sie beispielsweise in der WO 2013/034504 A1 offenbart sind, umfassen, je nach Ausbaustufe, mehrere hundert Vorrats- und Abgabestationen. In diesen sind jeweils eine Mehrzahl von Arzneimittelportionen eines bestimmten Arzneimittels gelagert und auf Anforderungen können einzelne Arzneimittelportionen abgegeben werden. Mit dem Blisterautomaten werden die in den Vorrats- und Abgabestationen gelagerten Arzneimittelportionen patientenindividuell gemäß den ärztlich verordneten Eingabezeitpunkten zusammengestellt und verblistert.

Zur Zusammenstellung der Arzneimittelportionen werden entsprechende Vorrats- und Abgabestationen zur Abgabe einer oder mehrerer vereinzelter Arzneimittelportionen angesteuert. Bei der Ansteuerung einer Vorrats- und Abgabestation wird mit einer Vereinzelungseinrichtung eine einzelne Arzneimittelportion separiert und über eine Abgabeöffnung einer Führungseinrichtung des Blisterautomaten übergeben. Mittels der Führungseinrichtung wird eine abgegebene Arzneimittelportion, gegebenenfalls unter Zwischenschaltung einer Sammeleinrichtung, einer Verpackungseinrichtung zugeführt, welche einzelne oder mehrere Arzneimittelportionen entsprechend der ärztlichen Vorgabe verblistert.

Zur Vereinzelung der Arzneimittelportionen, die in einem Vorratsbehälter einer Vorrats- und Abgabestation gelagert sind, umfasst die Vereinzelungseinrichtung einen Rotor mit einer Vielzahl von Kanälen, die üblicherweise am Außenumfang des Rotors angeordnet sind. Die Kanäle sind an die jeweils zu separierenden Arzneimittelportionen hinsichtlich ihrer Abmessungen derart angepasst, dass in einem Kanal die Arzneimittelportionen lediglich übereinander, nicht aber nebeneinander angeordnet sein können. Die Kanäle können auch derart bemessen sein, dass in einen Kanal lediglich eine Arzneimittelportion aufgenommen werden kann.

Zur Abgabe einer Arzneimittelportion aus einem Kanal wird ein Kanal über eine Abgabeöffnung in dem Gehäuse des Vorratsbehälters bewegt, und die in dem Kanal an unterster Stelle angeordnete Arzneimittelportion rutscht bzw. fällt in die Abgabeöffnung. Um zu vermeiden, dass weitere in dem oder über dem Kanal lagernde Arzneimittelportionen ebenfalls abgegeben werden, ist in dem Bereich über der Abgabeöffnung ein Rückhalteabschnitt eines Rückhaltemittels zumindest in oder über den Kanal geführt bzw. angeordnet, der an der Abgabeöffnung ausgerichtet ist. Dieser Rückhalteabschnitt ist in Bezug auf die Höhe des Kanals derart in diesem oder über diesem angeordnet, dass unter dem Rückhalteabschnitt lediglich eine Arzneimittelportion angeordnet sein kann. Sofern der Rückhalteabschnitt in den Kanal geführt ist, um die unterste Arzneimittelportion von darüber angeordneten zu trennen, weisen einzelne Kanäle separierende Vorsprünge einen Schlitz auf, welcher den Rückhalteabschnitt aufnimmt. Sofern der Rückhalteabschnitt über den Kanälen angeordnet bzw. geführt ist, ist dieser regelmäßig nur geringfügig über den oberen Enden der Vorsprünge geführt, so dass vermieden wird, dass bei Abgabe der Arzneimittelportion weitere Arzneimittelportionen in den Kanal gelangen.

Der Rückhalteabschnitt des Rückhaltemittels ist bei bekannten Vorrats- und Abgabestationen von außen durch einen horizontalen Gehäuseschlitz in den Vorratsbehälter geführt, und zwar derart, dass der Rückhalteabschnitt, in Abhängigkeit von der Gestaltung der Kanäle, über diesen oder in einem Schlitz in den Kanälen angeordnet ist. Wie bereits oben dargelegt, sind die Kanäle und damit die die Kanäle definierenden Vorsprünge an die Abmessungen der jeweils zu vereinzelnden Arzneimittelportionen angepasst. Dies bedeutet unter anderem, dass die Vorsprünge bei unterschiedlichen Arzneimittelportionen unterschiedlich hoch sind. Können mehrere Arzneimittelportionen in einen Kanal aufgenommen werden, ist auch die Lage des Schlitzes, in welchen der Rückhalteabschnitt des Rückhaltemittels eingreift, von den Abmessungen der Arzneimittelportionen abhängig. Dies bedingt, dass die Position des horizontalen Schlitzes in dem Gehäuse ebenfalls von den Abmessungen der Arzneimittelportionen abhängig ist, so dass bei unterschiedlichen Arzneimittelportionen unterschiedliche Gehäuse zu verwenden sind. Mit anderen Worten, das gleiche Gehäuse kann nicht mit Arzneimittelportionen mit unterschiedlichen Abmessungen genutzt werden.

Es ist daher Aufgabe der vorliegenden Erfindung, einen Vorratsbehälter für eine Vorrats- und Abgabestation bereitzustellen, welcher für Arzneimittelportionen mit unterschiedlichen Abmessungen genutzt werden kann.

Die Aufgabe wird gelöst durch einen Vorratsbehälter gemäß Patentanspruch 1. Der erfindungsgemäße Vorratsbehälter für eine Vorrats- und Abgabestation für Arzneimittel umfasst ein einen Aufnahmeraum für Arzneimittelportionen umschließendes Gehäuse mit einem kreiszylinderförmigen Abschnitt und einer Bodenfläche, wobei der kreiszylinderförmige Abschnitt eine vertikale Führungsausnehmung und die Bodenfläche eine Abgabeöffnung aufweist. Der Vorratsbehälter umfasst ferner eine in dem kreiszylinderförmigen Abschnitt des Gehäuses angeordnete Vereinzelungseinrichtung mit zumindest einem Kanal zur Aufnahme zumindest einer Arzneimittelportion sowie ein Rückhaltemittel mit einem Rückhalteabschnitt, wobei der Rückhalteabschnitt vollständig innerhalb des kreiszylinderförmigen Abschnitts angeordnet und oberhalb der Abgabeöffnung gehalten ist und einen Eintritt weiterer Arzneimittelportionen in einen an der Abgabeöffnung ausgerichteten Kanal verhindert. Ob der Rückhalteabschnitt des Rückhaltemittels über dem zumindest einen Kanal oder in einem Schlitz von den Kanal definierenden Vorsprüngen gehalten bzw. geführt ist, ist abhängig von der genauen Gestaltung der Kanäle und hat keinen Einfluss auf die Erfindung als solche.

Das Rückhaltemittel umfasst ferner ein Führungsmittel, wobei das Führungsmittel in der Führungsausnehmung angeordnet ist und wobei die vertikale Führungsausnehmung und das Führungsmittel derart zusammenwirken, dass das Rückhaltemittel höhenverstellbar in der Führungsausnehmung angeordnet bzw. gelagert ist, gleichzeitig eine Drehbewegung bzw. ein radiales Wandern des Rückhaltemittels verhindert ist.

Während es also bei bekannten Vorrastbehältern vorgesehen ist, dass der Rückhalteabschnitt durch einen Gehäuseschlitz eingeführt ist und die Position des Gehäuseschlitzes somit von den Abmessungen der Arzneimittelportionen abhängig ist, ist es erfindungsgemäß vorgesehen, dass das Rückhaltemittel innerhalb des Vorratsbehälters höhenverstellbar ist, wozu eine vertikale Führungsausnehmung in dem kreiszylinderförmigen Abschnitt vorgesehen ist, die mit einem entsprechenden Führungsmittel des Rückhalteabschnittes zusammenwirkt, um die notwendige Höhenverstellbarkeit zu gewährleisten. Die vertikale Führungsausnehmung und das Führungsmittel sind ferner so ausgebildet, dass ein radialer Versatz des Führungsmittels innerhalb des kreiszylinderförmigen Abschnitts vermieden wird. Das ein solcher Versatz verhindert wird ist wesentlich, da der Rückhalteabschnitt des Rückhaltemittels stets an bzw. in dem Kanal ausgerichtet bzw. angeordnet sein muss, der an der Abgabeöffnung in der Bodenfläche ausgerichtet ist.

Die genaue Ausbildung der Führungsausnehmung und des Führungsmittels sind nicht erfindungswesentlich, solange es gewährleistet ist, dass das Rückhaltemittel über die Kombination Führungsausnehmung/Führungsmittel einerseits höhenverstellbar ist, andererseits radial aber nicht versetzbar.

Aufgrund der erfidnungsgemäßen Ausgestaltung des Vorratsbehälters, und isnbesondere der Anordnung des Rückhaltemittels in dem Vorratsbehälter, kann ein Vorratsbehälter mit Arzneimittelportionen mit beliebigen Abmessungen genutzt werden, da der Vorratsbehälter bzw. sein Gehäuse keinerlei Anpassung an die Abmessungen der zu vereinzelnden Arzneimittelportionen erfodern.

Bei einer konstruktiv einfachen bevorzugten Ausführungsform ist es beispielsweise vorgesehen, dass die Führungsausnehmung als vertikaler Rücksprung in dem kreiszylinderförmigen Abschnitt ausgebildet ist, wobei das Führungsmittels zumindest abschnittsweise in dem Rücksprung angeordnet ist. Der Rücksprung und das Führungsmittel müssen so ausgebildet sein, dass die Höhenverstellbarkeit gewährleistet ist, andererseits aber der radiale Versatz vermieden wird. Dies kann beispielsweise erreicht werden, indem das Führungsmittel und die Führungsausnehmung über eine Art Schwalbenschwanzverbindung ineinandergreifen. Alternativ kann es auch ausreichend sein, wenn die Seitenflächen der Führungsausnehmung senkrecht parallel zueinander ausgebildet sind. Um die erfindungsgemäß notwenige Funktionalität der Kombination Führungsausnehmung/Führungsmittel zu gewährleisten, sind dem Fachmann eine Vielzahl weiterer Ausführungsmöglichkeiten bekannt.

Bei einer bevorzugten ebenfalls konstruktiv sehr einfachen Ausführungsform ist die Führungsausnehmung als vertikaler Führungsschlitz ausgebildet und das Führungsmittel umfasst einen sich zumindest abschnittsweise durch den Führungsschlitz erstreckenden Führungsvorsprung, welcher höhenverstellbar in dem vertikalen Führungsschlitz ist.

Durch die Rotation der Vereinzelungseinrichtung wird eine Bewegung auf die in dem Aufnahmeraum gelagerten Arzneimittelportionen übertragen, wobei diese Bewegung auch eine Reibung von Arzneimittelportionen aneinander bedingt. Durch u.a. die Reibung von Arzneimittelportionen aneinander platzen kleinste Bruchstücke von den Arzneimittelportionen ab, so dass ein Arzneimittelstaub entsteht. Um einen Austritt von Arzneimittelstaub zu verhindern ist es bei einer bevorzugten Ausführungsform vorgesehen, dass die vertikale Führungsausnehmung einen vertikalen Führungsschlitz und das Führungsmittel einen sich durch den Führungsschlitz erstreckenden Führungsvorsprung umfasst, wobei das Führungsmittel selber breiter als der Führungsvorsprung ausgebildet ist. Da das Führungsmittel breiter als der Führungsvorsprung, der sich durch den vertikalen Führungsschlitz erstreckt, ausgebildet ist, verhindert dieser als eine Art "Schild" den Austritt von Staubpartikeln über den vertikalen Führungsschlitz.

Wie bereits angedeutet, bedingen die Abmessungen der zu vereinzelnden Arzneimittelportionen die Ausgestaltung der Kanäle bzw. Vorsprünge, wobei diese Ausgestaltung wiederum die Anordnung des Rückhaltemittels bedingt, also die "Höhe" bzw. Position in dem kreiszylinderförmigen Abschnitt des Gehäuses. Um die "Höhe" des Rückhaltemittels auch von außen beeinflussen zu können, ist es bei einer bevorzugten Ausführungsform vorgesehen, dass das Rückhaltemittel ein mit dem Führungsmittel gekoppeltes und außerhalb des kreiszylinderförmigen Abschnitts angeordnetes Bedienelement umfasst. Die Kopplung zwischen dem Führungsmittel und dem Bedienelement ist beliebig. Beispielsweise kann vorgesehen sein, dass sowohl in dem Führungsmittel als auch in dem Bedienelement ein Magnet angeordnet ist, über welchen die Kopplung stattfindet. Alternativ kann vorgesehen sein, dass das Bedienelement mit einem sich durch den Führungsschlitz erstreckenden Führungsvorsprung verbunden ist, wobei eine solche Ausführung nur dann in Frage kommt, wenn bei dem Vorratsbehälter ein vertikaler Führungsschlitz in dem kreiszylinderförmigen Abschnitt des Gehäuses vorgesehen ist.

Die bevorzugte Ausführungsform des Vorratsbehälters mit dem Bedienelement ermöglicht es, das Rückhaltemittel von außerhalb des kreiszylinderförmigen Abschnitts höhenzuverstellen. Für den Fall, dass der Rückhalteabschnitt des Rückhaltemittels in einem Schlitz der Vorsprünge der Vereinzelungseinrichtung geführt ist, wird die eingestellte Höhe durch diesen Schlitz als solchen fixiert, das heißt der Rückhalteabschnitt, und damit das Rückhaltemittel, kann aufgrund der Anordnung in dem bzw. den Schlitzen nicht nach oben oder unten wandern. Auch wenn der Rückhalteabschnitt oben auf den Vorsprüngen bzw. den Öffnungen der Kanäle aufliegt, ist aufgrund des Eigengewichts des Rückhaltemittels sowie der von oben auf den Rückhalteabschnitt drückenden Arzneimittelportionen ein Wandern des Rückhaltemittels nach oben unwahrscheinlich. Wenn das Rückhaltemittel aber nicht höhenfixiert ist, liegt es mit seinem Rückhalteabschnitt entweder oben auf den Vorsprüngen oder in dem Schlitz auf. Um dieses zu vermeiden, ist es bei einer bevorzugten Ausführungsform vorgesehen, dass das Bedienmittel sowie der kreiszylinderförmige Abschnitt Haltemittel umfassen, über welche das Rückhaltemittel in dem kreiszylinderförmigen Abschnitt höhenfixierbar ist. Die Haltemittel sind dazu so ausgebildet, dass diese ineinandergreifen und über das Ineinandergreifen die Höhenfixierung bewirken. Beispielsweise können die Haltemittel als Rastmittel ausgebildet sein.

Ein Vorratsbehälter wird üblicherweise im Laufe der Zeit mit einer Mehrzahl von verschiedenen Arzneimittelarten bestückt sein, die regelmäßig unterschiedliche Abmessungen aufweisen und daher die Verwendung unterschiedlicher Vereinzelungseinrichtungen bedingen. Um eine Vereinzelungseinrichtung aus einem Vorratsbehälter zu entfernen ist es notwendig, das Rückhaltemittel aus dem Vorratsbehälter zu entnehmen. Sofern das Rückhaltemittel derart ausgeführt ist, das ein Bauteil, wie beispielsweise das Bedienelement, nach außen geführt ist, ist es bei einer bevorzugten Ausführungsform vorgesehen, dass der Vorratsbehälter eine an das Bedienelement angepasste Öffnung umfasst. Bei der Entnahme des Rückhaltemittels wird dieses in der Höhe so verstellt, dass das außerhalb angeordnete Bedienelement durch diese Öffnung nach innen geschoben werden kann, so dass das Rückhaltemittel nach innen hin entnommen werden kann. Um zu vermeiden, dass Staubpartikel über diese Öffnung austreten, ist diese vorzugsweise derart in dem kreiszylinderförmigen Abschnitt bzw. dem Gehäuse angeordnet und ausgebildet, dass die Öffnung in einem Betriebszustand von dem Führungsmittel verdeckt ist.

Bei einer Ausführungsform des Vorratsbehälters, bei welcher in dem kreiszylinderförmigen Abschnitt des Gehäuses ein vertikaler Führungsschlitz vorgesehen ist, ist es zur weiteren Vermeidung eines Austritts von Arzneimittelstaub bevorzugt, dass dem vertikalen Führungsschlitz elastische Schließmittel zugeordnet sind, die den Austritt von Staubpartikeln aus dem Vorratsbehälter erschweren, gleichzeitig aber eine Bewegung des Führungsvorsprungs in dem Führungsschlitz ermöglichen. Beispielsweise können die Führungsmittel als eine Art elastischer Kamm ausgebildet sein, der den Führungsschlitz an den Stellen, bei denen nicht das Führungsmittel den Führungsschlitz durchdringt, bedeckt.

Im Nachfolgenden wird eine bevorzugte Ausführungsform des erfindungsgemäßen Vorratsbehälters für Vorrats- und Abgabestationen unter Bezugnahme auf die beigefügten Zeichnungen beschrieben, in welcher
Figuren 1a-1d verschiedene Ansichten einer bevorzugten Ausführungsform des erfindungsgemäßen Vorratsbehälters zeigen;
Figuren 2a-2d verschiedene Schnittansichten des Vorratsbehälters zeigen;
Figuren 3a, 3b weitere Schnittansichten des Vorratsbehälters zeigen;
Figur 4 eine Detailansicht der Führungsausnehmung zeigt; und
Figur 5 eine Detailansicht der Kombination Vereinzelungseinrichtung/Rückhaltemittel zeigt.

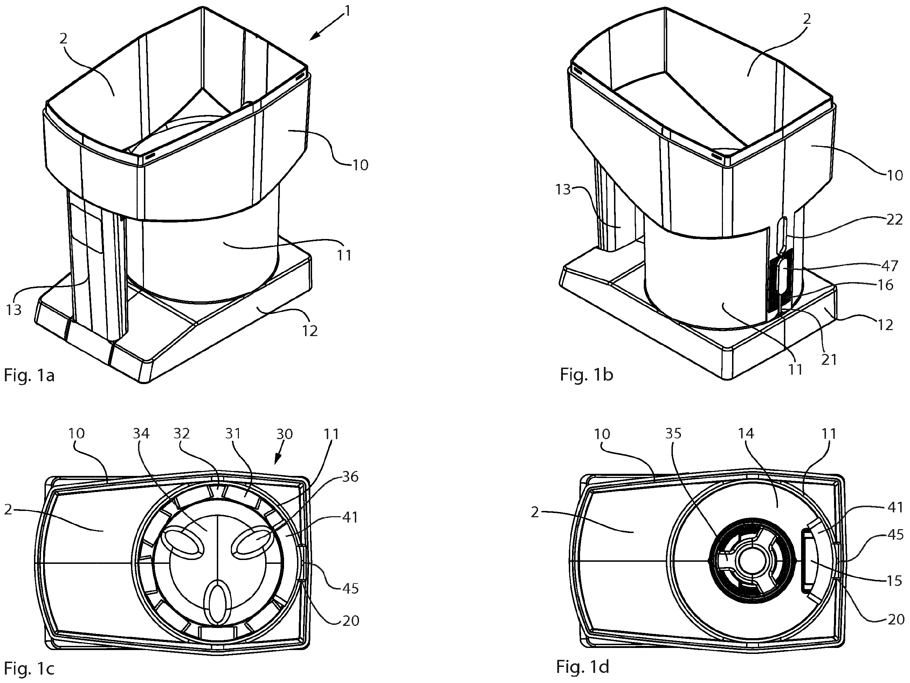

Die Figuren 1a und 1b zeigen zwei Schrägansichten einer bevorzugten Ausführungsform des Vorratsbehälters 1 für eine Vorrats- und Abgabestation für Arzneimittel. Die Figuren 1c und 1d zeigen Draufsichten auf den Vorratsbehälter, wobei bei Figur 1d eine Vereinzelungseinrichtung 30, die bei Figur 1c gezeigt ist, fortgelassen ist. Bei sämtlichen Darstellungen des Vorratsbehälters ist zur besseren Einsicht eine Abdeckung fortgelassen, die im üblichen Betrieb eines Vorratsbehälters vorgesehen ist. Der in den Figuren 1a-1d gezeigte erfindungsgemäße Vorratsbehälter ist Teil einer Vorrats- und Abgabestation für Arzneimittel, wobei, wie dies bereits der Name verdeutlich, in dem Vorratsbehälter die zu vereinzelnden Arzneimittelportionen gelagert sind. Der Vorratsbehälter 1 umfasst ferner eine Vereinzelungseinrichtung, die Teil einer sich über den Vorratsbehälter und einen Abgabeteil erstreckenden Vereinzelungsmechanik ist, und die unter Bezugnahme auf nachfolgende Figuren genauer beschrieben wird. Das Abgabeteil kann beispielsweise eine Steuerung und einen Antrieb für die Vereinzelungseinrichtung umfassen.

Der Vorratsbehälter selbst umfasst ein einen Aufnahmeraum 2 für (nicht dargestellte) Arzneimittelportionen umschließendes Gehäuse 10, welches im mittleren Bereich einen kreiszylinderförmigen Abschnitt 11 und darunter einen Fußabschnitt 12 umfasst. Das Gehäuse des Vorratsbehälters umfasst ferner einen Griff 13, mit dem der Vorratsbehälter 1 einfach von dem Abgabeteil der Vorrats- und Abgabestation heruntergenommen werden kann.

Wie dies insbesondere in Figur 1d zu erkennen ist, ist der kreiszylinderförmige Abschnitt 11 des Gehäuses nach unten durch eine Bodenfläche 14 abgeschlossen, die eine Abgabeöffnung 15 sowie eine zentrale Öffnung umfasst, wobei bei Figur 1d in dieser zentralen Öffnung ein Kopplungsmittel 35 der in dem kreiszylinderförmigen Abschnitt 11 angeordneten Vereinzelungseinrichtung 30 dargestellt ist. Wie dies in Figur 1c ansatzweise zu erkennen ist, ist die Vereinzelungseinrichtung 30 rotorförmig ausgebildet und umfasst eine Mehrzahl von Kanälen 31 zur Aufnahme von zumindest einer Arzneimittelportion. Die Kanäle 31 sind gebildet durch eine Mehrzahl von Vorsprüngen 32, deren Außenumfang an der Innenwandung des kreiszylinderförmigen Abschnitts 11 anliegt. Wie dies insbesondere unter Bezugnahme auf nachfolgende Figuren zu erkennen ist, umfasst die Vereinzelungseinrichtung 30 eine konische Oberfläche, wobei die Konizität dafür Sorge trägt, dass keine Arzneimittelportionen in beispielsweise der Mitte der Oberfläche der Vereinzelungseinrichtung liegen bleiben. Bei der gezeigten Ausführungsform umfasst die konische Oberfläche der Vereinzelungseinrichtung ferner eine Mehrzahl von Vorsprüngen 36, die Arzneimittelportionen zum Außenumfang und damit hin zu den Kanälen 31 leitet.

In den Figuren 1c, 1d ist im rechten Bereich des kreiszylinderförmigen Abschnitts 11 des Gehäuses ein Rückhaltemittel angeordnet, dessen Rückhalteabschnitt 41 an der Bodenöffnung 15 ausgerichtet ist. Wie dies insbesondere in Figur 1c zu erkennen ist, verschließt der Rückhalteabschnitt einen an der Abgabeöffnung 15 ausgerichteten Kanal, so dass keine weiteren Arzneimittelportionen in den an der Abgabeöffnung 15 ausgerichteten Kanal eindringen können.

Wie dies in Figuren 1c und 1d ferner zu erkennen ist, unter Bezugnahme auf nachfolgende Figuren aber detaillierter beschrieben ist, ist das Rückhaltemittel über ein Führungsmittel 45 in einer Führungsausnehmung 20 in dem kreiszylinderförmigen Abschnitt des Gehäuses gelagert, wobei die Ausbildung der Führungsausnehmung 20 sowie des Führungsmittels 45 dafür Sorge tragen, dass das Führungsmittel bei einer Drehung der Vereinzelungseinrichtung radial nicht versetzt wird, sprich sich nicht mit der Vereinzelungseinrichtung bewegt, sondern stets an der Abgabeöffnung ausgerichtet ist.

Wie dies Figur 1b zu entnehmen ist, umfasst der kreiszylinderförmige Abschnitt 11 gegenüber dem Griff 13 einen vertikalen Führungsschlitz 21, der von einem Rastbereich 16 umgeben ist. Den vertikalen Führungsschlitz 21 durchdringt ein (nicht dargestellter) Führungsvorsprung, an dem ein Bedienungselement 47, welches außerhalb des kreiszylinderförmigen Abschnitts 11 angeordnet ist, befestigt ist.

Oberhalb des Bedienelements ist in dem kreiszylinderförmigen Abschnitt eine Öffnung 22 vorgesehen, die bei der gezeigten Ausführungsform dem Umfang des Bedienelements 47 entspricht, so dass das Rückhaltemittel, welches bei der gezeigten Ausführungsform über das Bedienelement 47 von außen bewegbar ist, über diese Öffnung nach innen in den kreiszylinderförmigen Abschnitt bewegt und so aus dem Vorratsbehälter hinausgenommen werden kann.

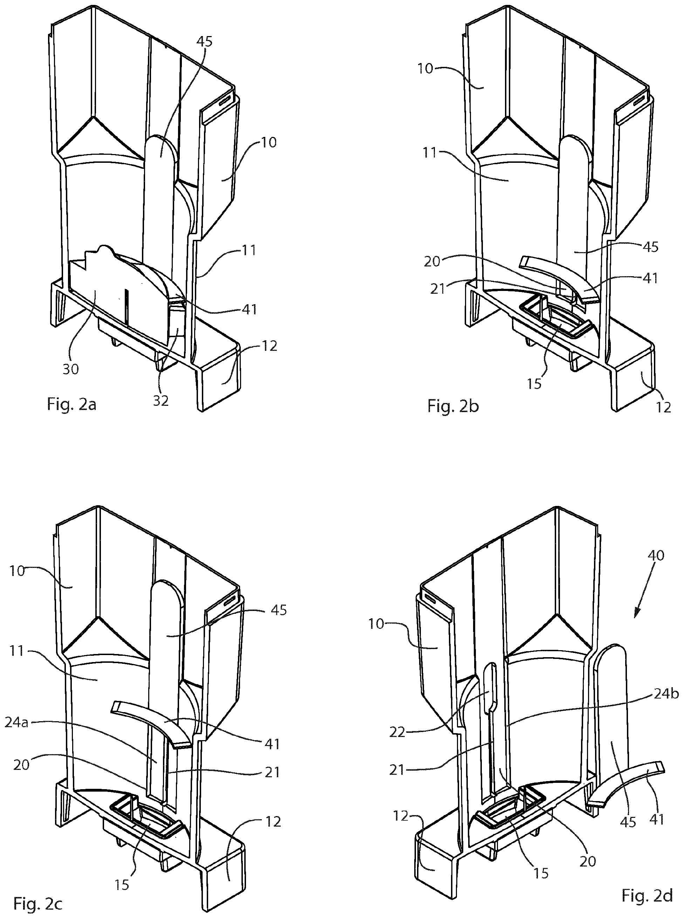

Figuren 2a-2d zeigen verschiedene Schnittansichten einer Ausführungsform des erfindungsgemäßen Vorratsbehälters. Bei Figur 2a ist zu erkennen, dass der Rückhalteabschnitt 41 des Rückhaltemittels über das Führungsmittel 45 über den Vorsprüngen 32 der Vereinzelungseinrichtung 30 gehalten ist. Bei den Figuren 2a-2d ist ebenfalls die vertikale Führungsausnehmung 20 in dem kreiszylinderförmigen Abschnitt 11 des Vorratsbehälters zu erkennen. Bei der gezeigten Ausführungsform ist die Führungsausnehmung 20 derart ausgebildet, dass zwei parallele gegenüberliegende Seitenwände 24a, 24b in dem kreiszylinderförmigen Abschnitt ausgebildet sind. Die Führungsausnehmung 20 selbst durchdringt die Wandung des kreiszylinderförmigen Abschnitts 11 nicht, ist also lediglich als ein Rücksprung ausgebildet. Aufgrund der Ausgestaltung der Seitenwände 24a, 24b der Führungsausnehmung ist sichergestellt, dass bei einer Drehbewegung der Vereinzelungseinrichtung 30 kein radialer Versatz des Rückhaltemittels innerhalb des kreiszylinderförmigen Abschnitts 11 stattfindet.

Bei der in den Figuren 2a-2d gezeigten Ausführungsform umfasst die Führungsausnehmung 20 ferner einen vertikalen Führungsschlitz 21, durch den sich, wie dies bei nachfolgenden Figuren detaillierter beschrieben wird, ein Führungsvorsprung, der an dem Führungsmittel 45 ausgebildet ist, erstreckt.

Ferner ist bei der gezeigten Ausführungsform in der Führungsausnehmung 20 eine Öffnung 22 ausgebildet, durch welche beim Einbau des Rückhaltemittels ein Bedienelement geführt werden kann. Über das vorgenannte Bedienelement und den Führungsvorsprung ist das Rückhaltemittel in der Führungsausnehmung parallel zur Drehachse der Vereinzelungseinrichtung gesichert. Bei alternativen Ausführungsformen, bei denen beispielsweise ein Führungsschlitz nicht vorgesehen ist, kann dies durch eine spezielle Gestaltung der Führungsausnehmung erreicht werden, beispielsweise indem die Seitenwände 24a, 24b zur Drehachse der Vereinzelungseinrichtung konisch zulaufen und eine Art Schwalbenschwanzverbindung zwischen Führungsausnehmung und Führungsmittel hergestellt ist.

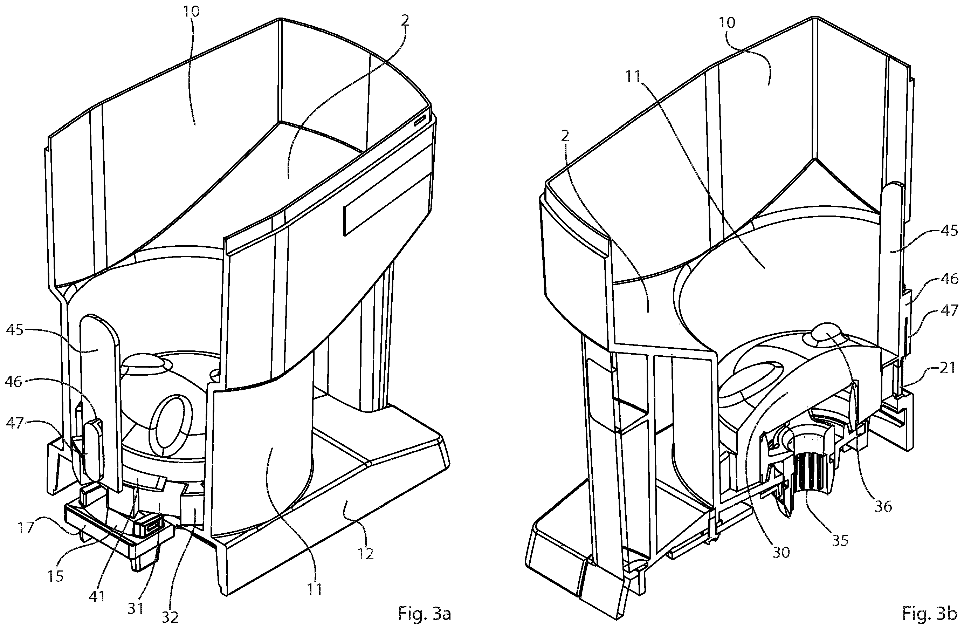

Figuren 3a, 3b zeigen weitere Schnittansichten einer Ausführungsform des Vorratsbehälters, wobei bei diesen Schnittansichten insbesondere die Ausrichtung des Rückhaltemittels zu der Vereinzelungseinrichtung 30 und der Abgabeöffnung 15 sowie das Rückhaltemittel selbst gemäß der hier beschriebenen Ausführungsform gezeigt sind. Bei Figur 3a ist ein Teil des Gehäuses 10 sowie des kreiszylinderförmigen Abschnitts 11 fortgelassen und man kann erkennen, dass das Rückhaltemittel 40, bzw. dessen Rückhalteabschnitt 41, über der Abgabeöffnung 15 der Bodenfläche angeordnet ist, so dass bei Ausrichtung eines Kanals 31 an der Abgabeöffnung nur der oder die Arzneimittelportionen abgegeben werden, die in dem Kanal unterhalb des Rückhalteabschnitts angeordnet sind.

Bei den Figuren 3a und 3b ist der genauere Aufbau des Rückhaltemittels gemäß Ausführungsbeispiel zu erkennen. Dieses umfasst ein Führungsmittel 45, welches in der vertikalen Führungsausnehmung, die in Figur 3b lediglich teilweise zu erkennen ist, angeordnet ist. Im unteren Abschnitt des Führungsmittels 45 erstreckt sich nach außen ein Führungsvorsprung 46, welcher sich durch den Führungsschlitz 21 erstreckt. An dem Führungsvorsprung 46 ist ein Bedienelement 47 angeordnet, welches breiter als der Führungsschlitz 21 ist und das Führungsmittel 40 koaxial fixiert.

Das Bedienelement 47 sorgt bei der gezeigten Ausführungsform also auch für eine axiale Fixiering des Rückahaltemittels, und zwar indem ein Abschnitt des kreiszylinderförmigen Abschnitts zwischen dem Bedienelement 47 und dem Führungsmittel 45 "eingeklemmt" ist. Eine entsprechende Fixiering könnte man auch über eine geeignete Ausgestaltung der Führungsausnehmung und des Führungsmittel stattfinden, beispielsweise indem eine Art Schwalbenschwanzverbindung verwendet wird.

In Figur 3b ist ferner zu erkennen, dass die Vereinzelungseinrichtung 30 ein Kopplungsmittel 35 umfasst, über welches die Vereinzelungseinrichtung 30 mit einem Antrieb koppelbar ist. Bei alternativen Ausführungsformen ist es auch vorstellbar, dass der Vorratsbehälter selbst einen Antrieb zur Rotation der Vereinzelungseinrichtung umfasst.

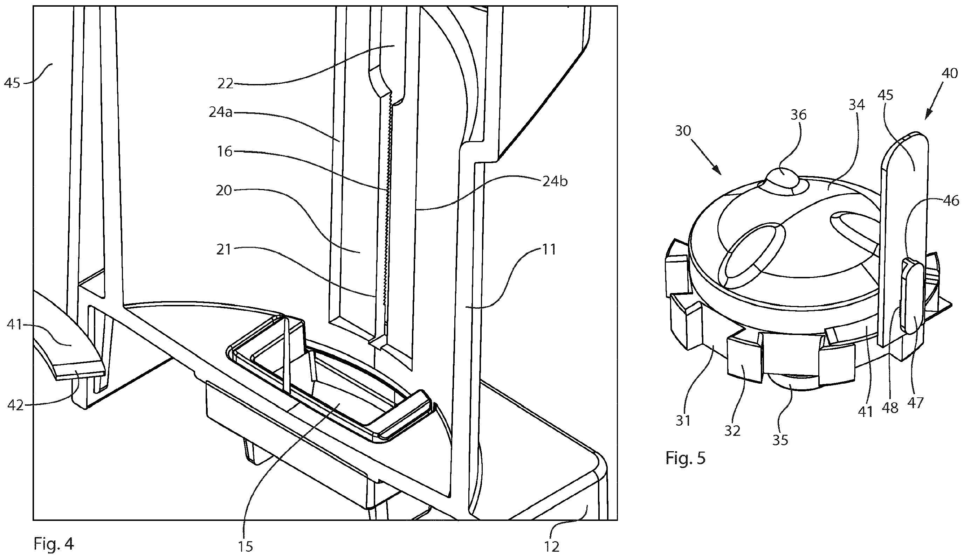

Figur 4 zeigt eine Detailansicht der Führungsausnehmung, wobei das Rückhaltemittel axial hin zur Drehachse verschoben ist, wie dies bereits bei Figur 2d gezeigt war. Der Rückhalteabschnitt 41 des Rückhaltemittels hat abgeflachte Enden 42, so dass in dem Aufnahmeraum angeordnete Arzneimittelportionen sanft untergriffen werden können. Die Führungsausnehmung 20 ist an der Abgabeöffnung 15 in der Bodenfläche angeordnet und bei der gezeigten Ausführungsform rechteckig ausgebildet. Wie bereits unter Bezugnahme auf vorhergehende Figuren beschrieben, ist die Führungsausnehmung selbst als Rücksprung ausgebildet, umfasst jedoch mittig einen Führungsschlitz 21, der sich durch den kreiszylinderförmigen Abschnitt 11 erstreckt. Im oberen Abschnitt der Führungsausnehmung 20 ist ferner ein Teil der Öffnung 22 zu erkennen, über welche ein Bedienelement (siehe Figur 5) geführt werden kann, was den Einbau des Rückhaltemittels in den Vorratsbehälter selbst erleichtert. Bei Figur 4 und Figur 5 sind Haltemittel 16, 48 angedeutet, über welche das Rückhaltemittel koaxial bei einer bestimmten "Höhe" (in Bezug auf die Führungsausnehmung bzw. die Vereinzelungseinrichtung) fixiert werden kann. Bei der gezeigten Ausführungsform sind die Haltemittel 16, 48 als Rastmittel ausgebildet.

Figur 5 zeigt noch einmal den genauen Aufbau der Vereinzelungseinrichtung 30, welche bei der gezeigten Ausführungsform eine Mehrzahl von Vorsprüngen 32 umfasst, welche eine Mehrzahl von Kanälen 31 definieren, die Arzneimittelportionen zur Vereinzelung aufnehmen. Auf der konischen Oberfläche 34 der Vereinzelungseinrichtung sind Vorsprünge 36 angeordnet, die bei einer Drehbewegung der Vereinzelungseinrichtung in dem über der Vereinzelungseinrichtung befindlichen Aufnahmeraum 2 gelagerte Arzneimittelportionen zu den Kanälen leiten bzw. für eine Lockerung von ggf. verhakten Arzneimittelportionen sorgen.

## Patentansprüche

1. Vorratsbehälter (1) für eine Vorrats- und Abgabestation für Arzneimittel, aufweisend:
ein einen Aufnahmeraum (2) für Arzneimittelportionen umschließendes Gehäuse (10) mit einem kreiszylinderförmigen Abschnitt (11) und einer Bodenfläche (14), wobei der kreiszylinderförmige Abschnitt (11) eine vertikale Führungsausnehmung (20) und die Bodenfläche (14) eine Abgabeöffnung (15) aufweist,
eine in dem kreiszylinderförmigen Abschnitt (11) des Gehäuses (10) angeordnete Vereinzelungseinrichtung (30) mit zumindest einem Kanal (31) zur Aufnahme zumindest einer Arzneimittelportion, und
ein Rückhaltemittel (40) mit
einem Rückhalteabschnitt (41), wobei der Rückhalteabschnitt (41) vollständig innerhalb des kreiszylinderförmigen Abschnitts angeordnet und oberhalb der Abgabeöffnung (15) gehalten ist und einen Eintritt weiterer Arzneimittelportionen in einen an der Abgabeöffnung (15) ausgerichteten Kanal (31) verhindert, und
einem Führungsmittel (45, 46), wobei das Führungsmittel (45, 46) in der Führungsausnehmung (20, 21) angeordnet ist und wobei die vertikale Führungsausnehmung (20, 21) und das Führungsmittel (45, 46) derart zusammenwirken, dass das Rückhaltemittel (40) über das Führungsmittel (45, 46) höhenverstellbar in der Führungsausnehmung (20, 21) angeordnet ist und eine Drehbewegung des Rückhaltemittels (40) verhindert ist.

2. Vorratsbehälter (1) für eine Vorrats- und Abgabestation für Arzneimittel nach Anspruch 1,
**dadurch gekennzeichnet, dass** die Führungsausnehmung (20) als vertikaler Rücksprung in dem kreiszylinderförmigen Abschnitt (11) ausgebildet ist, wobei das Führungsmittel (45) zumindest abschnittsweise in dem Rücksprung angeordnet ist.

3. Vorratsbehälter (1) für eine Vorrats- und Abgabestation für Arzneimittel nach Anspruch 1,
**dadurch gekennzeichnet, dass** die Führungsausnehmung (20) als vertikaler Führungsschlitz (21) ausgebildet ist und das Führungsmittel (45) einen sich zumindest abschnittsweise durch den Führungsschlitz (21) erstreckenden Führungsvorsprung (46) umfasst.

4. Vorratsbehälter (1) für eine Vorrats- und Abgabestation für Arzneimittel nach Anspruch 1,
**dadurch gekennzeichnet, dass** die vertikale Führungsausnehmung (20) einen vertikalen Führungsschlitz (21) und das Führungsmittel (45) einen sich durch den Führungsschlitz (21) erstreckenden Führungsvorsprung (46) umfasst.

5. Vorratsbehälter (1) für eine Vorrats- und Abgabestation für Arzneimittel nach einem der Anspruch 1 - 4,
**dadurch gekennzeichnet, dass** das Rückhaltemittel (40) ein mit dem Führungsmittel (45) gekoppeltes und außerhalb des kreiszylinderförmigen Abschnitts (11) angeordnetes Bedienelement (47) umfasst.

6. Vorratsbehälter (1) für eine Vorrats- und Abgabestation für Arzneimittel nach Anspruch 5,
**dadurch gekennzeichnet, dass** das Bedienmittel (47) sowie der kreiszylinderförmige Abschnitt (11) Haltemittel (16, 48) umfassen, über welche das Rückhaltemittel (40) in dem kreiszylinderförmigen Abschnitt höhenfixierbar ist.

7. Vorratsbehälter (1) für eine Vorrats- und Abgabestation für Arzneimittel nach einem der Ansprüche 5 oder 6,
**dadurch gekennzeichnet, dass** der Vorratsbehälter eine an das Bedienelement (47) angepasste Öffnung (23) umfasst, wobei die Öffnung (23) vorzugsweise derart angeordnet und ausgebildet ist, dass die Öffnung (23) in einem Betriebszustand von dem Führungsmittel (45) verdeckt ist.

8. Vorratsbehälter (1) für eine Vorrats- und Abgabestation für Arzneimittel nach einem der Ansprüche 3 - 7,
**dadurch gekennzeichnet, dass** dem vertikalen Führungsschlitz (21) elastische Schließmittel (18) zugeordnet sind, die einen Austritt von Material aus dem Vorratsbehälter erschweren aber eine Bewegung des Führungsvorsprungs (46) in dem Führungsschlitz (21) ermöglichen.
